Europäisches Patentamt

(19) European Patent Office

Office européen des brevets

(11) Numéro de publication: **0 009 432**
**B2**

(12) NOUVEAU FASCICULE DE BREVET EUROPEEN

(45) Date de publication du nouveau fascicule du brevet:
**17.09.86**

(21) Numéro de dépôt: **79400615.5**

(22) Date de dépôt: **05.09.79**

(51) Int. Cl.⁴: **C 08 L 95/00,** B 32 B 11/00

(54) **Composition bitumineuse contenant des polymères et ses applications.**

(30) Priorité: **13.09.78 FR 7826336**

(43) Date de publication de la demande:
**02.04.80 Bulletin 80/7**

(45) Mention de la délivrance du brevet:
**14.04.82 Bulletin 82/15**

(45) Mention de la décision concernant l'opposition:
**17.09.86 Bulletin 86/38**

(84) Etats contractants désignés:
**AT BE CH DE GB IT LU NL SE**

(56) Documents cités:
**BE - A - 853 210**
**DE - A - 2 233 561**
**DE - A - 2 319 504**
**DE - B - 1 301 141**
**GB - A - 1 116 834**
**US - A - 3 459 695**
**US - A - 4 000 140**
**US - A - 4 081 502**
**US - A - 4 091 134**

**"Ataktisches Polypropylen APP S 66" VEBA-CHEMIE,**
**1975**

(73) Titulaire: **COMPOSANTS INDUSTRIALISES DU BATIMENT par abréviation C.I.B. Société dite:, Lieudit 'Le Pont Hurez' Route de Piscop, F-95350 Saint Brice sous Forêt (FR)**

(72) Inventeur: **Desgouilles, Henri Francis Maurice, Résidence La Closeraie 4 Rue des Fontaines, F-60500 Chantilly (FR)**

(74) Mandataire: **Bressand, Georges et al, c/o CABINET LAVOIX 2 Place d'Estienne d'Orves, F-75441 Paris Cedex 09 (FR)**

EP 0 009 432 B2

## Description

La présente invention est relative à une composition bitumineuse contenant des polymères et à ses applications en particulier dans le domaine de l'étanchéité.

Parmi les matières premières susceptibles d'assurer une fonction d'étanchéité, le bitume est connu et utilisé depuis la haute antiquité.

L'état physique du bitume est variable selon son mode de mise en œuvre.

Il est à l'état fondu lorsqu'il est utilisé en tant qu'enduit d'application à chaud. Il est également à l'état fondu lors de son association par enduction avec des supports appelés armatures, par exemple à base de carton feutre, de fibres de verre, de fibres synthétiques, etc. ... Il peut aussi être en solution ou se présenter sous forme d'émulsion.

On connaît déjà une famille de produits d'étanchéité, sous forme de feuilles manufacturées d'épaisseur variable conditionnées généralement sous forme de rouleaux dans lesquelles le bitume est associé aux supports précités.

Ces feuilles doivent être étanches et résister aux contraintes imposées par leur environnement, à savoir notamment: les contraintes mécaniques dues aux mouvements de l'ouvrage sur lequel elles sont appliquées; les contraintes naturelles atmosphériques (température, soleil, etc. ...) et les contraintes artificielles (agressions chimiques et physiques).

Les différentes familles de produits d'étanchéité à base de bitume font appel à trois grands types de cette matière première:

1) Les bitumes de distillation directe, qui sont constitués par la partie résiduelle après distillation sous vide du pétrole. Les principales variétés sont par exemple les bitumes 40/50, 80/100 et 180/220 (les deux chiffres mentionnés indiquent les valeurs de pénétration à l'aiguille mesurées à 25°C dans les conditions de la norme NFT 66 004). Leur point de ramollissement (40–50°C environ) dénommé TBA (voir NFT 66 008) est relativement bas. Très susceptibles à la température, ils ne peuvent être utilisés seuls à l'état solide sur des pentes importantes: leur fluage à des températures pouvant atteindre 70 à 90°C sur des toitures, est excessif.

2) Les bitumes oxydés que l'on obtient par soufflage d'air à des températures élevées dans certaines coupes de pétrole et/ou de bitumes de distillation directe. Par ce traitement le point de ramollissement augmente et la pénétration diminue: par exemple 100/40 (le premier chiffre indique la valeur du point de ramollissement TBA et le second chiffre indique la valeur de la pénétration à 25°C).

Si la résistance au fluage de ces bitumes est satisfaisante, par contre leur flexibilité à froid est médiocre et, d'autre part, notamment à froid, l'allongement à la rupture en traction est faible.

3) Les bitumes-polymères thermoplastiques parmi lesquels on peut citer les combinaisons suivantes qui ont des applications industrielles notables:

– Bitume – poly(éthylène-acétate de vinyle) dénommé
Bitume EVA
– Bitume – poly(styrène-butadiène-styrène) dénommé
Bitume SBS, et
– Bitume – poly(propylène atactique) dénommé
Bitume PPA.

Bien qu'étant plus susceptibles à la température que les bitumes oxydés, leur point de ramollissement est élevé ($\geqslant 100°C$) et leur comportement au fluage est satisfaisant.

Les propriétés nettement changées par rapport à des bitumes oxydés concernent:
– la souplesse à froid qui est remarquable, principalement dans le cas du bitume SBS;
– l'allongement à la rupture en traction (suivant norme NFG 07 001) est très élevé (environ 2000%) dans le cas du bitume SBS.

Par contre, comparativement à un bitume oxydé, un bitume SBS ne peut résister sans dommage à 250°C: la dégradation thermique en présence d'oxygène est excessivement rapide. La résistance à la flamme d'un chalumeau peut apporter également une restriction quant à l'emploi d'une telle méthode de soudage pour les bitumes SBS.

De leur côté, les bitumes PPA ont des propriétés de caractère visqueux prédominant. Leur comportement de nature élastique est très limité comparativement à un bitume SBS, l'allongement à la rupture varie entre 100 et 300%. D'autre part, leurs propriétés à froid, d'une manière générale, n'atteignent pas celles des bitumes SBS.

Par contre, les bitumes PPA possèdent une très bonne tenue à des contraintes thermiques élevées, par exemple: jusqu'à 250°C à l'état fondu.

Il ressort de ce qui précède que, pour les applications pratiques, les compositions bitumineuses doivent avoir une très bonne flexibilité à froid, une résistance élevée vis-à-vis des contraintes thermiques et un bon vieillissement. Cette combinaison de caractéristiques n'est réalisée par aucune composition bitumineuse antérieure.

Le brevet des Etats Unis d'Amérique numéro 4 000 140 décrit une feuille d'étanchéité comportant une composition à base de bitume et de polymères synthétiques et notamment une polyoléfine et un élastomère. Mais cette feuille d'étanchéité ne comportant pas de support et utilisant une composition à faible teneur en bitume (de 5 à 30% de bitume) n'est pas satisfaisante pour les utilisations envisagées ici.

L'invention a pour but de fournir une composition à base de bitume présentant les caractéristiques ci-dessus mentionnées et ne présentant pas les inconvénients des compositions antérieures.

La composition à base de bitume suivant l'invention est caractérisée en ce qu'elle est constituée d'un mélange ternaire de (a) 52 à 78% en poids de bitume; (b) 20 à 40% en poids de polyoléfine et (c) 2 à 8% en poids d'un élastomère butadiène-styrène.

La composition suivant l'invention présente notamment les propriétés avantageuses suivantes:

a) pliabilité à froid (suivant méthode indiquée ci-après): pas de fissures pour des températures pouvant atteindre −40°C;

b) point de ramollissement TBA ⩾ 140°C;

c) allongement à la rupture (suivant norme NFG 07 001) 800% à 2000%;

d) tenue thermique: après plusieurs heures à 250°C et ½ heure à 300°C le point de ramollissement et la pliabilité à froid restent inchangés.

La composition de l'invention est particulièrement utilisable dans le domaine de l'étanchéité et l'invention a encore pour objet un élément d'étanchéité caractérisé en ce qu'il comprend au moins un support formant armature portant une composition à base de bitume telle que défini ci-dessus.

D'autres caractéristiques et avantages de l'invention apparaîtront au cours de la description qui va suivre.

La composition de l'invention est constituée d'un mélange ternaire de bitume, de polyoléfine et d'élastomère butadiène-styrène.

Le bitume est présent à raison de 52 à 78% du poids du mélange et peut être un bitume de distillation directe ou un bitume oxydé. Les qualités préférées de bitume ont des pénétrations comprises entre 40 et 220. Pour une composition donnée du mélange ternaire, l'influence de la qualité du bitume se traduit surtout par des différences de susceptibilité thermique sans que les autres propriétés soient fondamentalement affectées.

La composition comprend en outre de 20 à 40% en poids de polyoléfine et, de préférence de 22% à 30% en poids.

Le terme «polyoléfine» englobe ici les produits résultant de la polymérisation ou de la copolymérisation d'un ou plusieurs hydrocarbures mono-éthyléniques, les chaînes macromoléculaires pouvant avoir une configuration quelconque.

On utilise notamment des homopolymères (par exemple du polypropylène ou du polybutylène) et des copolymères (par exemple éthylène-propylène et propylène-éthylène-butylène).

D'une manière générale, la compatibilité des polyoléfines amorphes, c'est-à-dire de structure désordonné, avec du bitume, est bonne.

D'autre part, les polyoléfines dont les chaînes linéaires contiennent des groupes «pendants» plus ou moins longs, offrent une meilleure compatibilité avec les bitumes. De même la longueur des chaînes macromoléculaires a une influence très marquée sur la compatibilité d'un tel système; elle doit donc être suffisamment longue pour apporter une viscosité suffisante. Ainsi de telles polyoléfines auront une viscosité de l'ordre de 10 Pa.s à 30 Pa.s (à 190°C et sous faible vitesse de cisaillement) et un point de ramollissement (TBA) compris entre 100 et 180°C.

La composition comprend enfin de 2% à 8% en poids d'un élastomère butadiène-styrène et de préférence de 3% à 6% en poids.

Les copolymères statistiques ou séquencés butadiène-styrène apportent à des degrés différents lorsqu'ils sont combinés avec du bitume, un accroissement du comportement élastique du mélange, se traduisant surtout par un fort allongement à la rupture.

Quelle que soit la structure de ces élastomères, leur masse moléculaire ne doit pas être trop élevée afin d'être compatible avec les deux autres constituants, bitume et polyoléfine.

Comme élastomère particulièrement approprié, on citera un copolymère triséquencé styrène-butadiène-styrène de poids moléculaire compris entre 100 000 et 300 000 environ.

Les limites en % ci-dessus sont importantes: en effet, si le pourcentage de polyoléfine dépasse la limite maximale, la viscosité de la composition est notablement élevée, la souplesse à froid n'est que très peu améliorée et la résistance à la rupture en traction croît très vite.

Par contre, avec une proportion de polyoléfine trop faible, le comportement thermique est très médiocre (TBA < 100°C), la résistance au fluage est nulle et la susceptibilité thermique est très élevée.

Enfin, avec une proportion trop forte d'élastomère styrène-butadiène, la viscosité augmente excessivement vite et la résistance à la rupture en traction devient démesurément grande; de plus, la résistance à la dégradation thermique diminue. Avec de trop faibles proportions d'élastomère, le mélange n'a aucune élasticité et il a une mauvaise flexibilité à froid.

Suivant les applications envisagées, la composition peut aussi contenir une charge minérale en une grande quantité allant jusqu'à 60% environ du poids du mélange ternaire; la poudre d'ardoise, la silice, le calcaire, sont des exemples de telles charges. On peut aussi introduire dans la composition des pigments (oxydes de fer, de chrome, de titane, etc. . . .), des ignifugeants (par exemple oxyde d'antimoine) et d'autres additifs appropriés pour ce type de composition.

Pour préparer la composition, on mélange les constituants à une température d'au moins 170°C jusqu'à obtention d'une masse homogène.

Pour démontrer la supériorité de la composition de l'invention par rapport aux compositions bitumineuses antérieures précitées, on a effectué une comparaison des propriétés compositions utilisées pour l'étanchéité de toitures et terrasses. La composition de l'invention y est référencée BPS et elle sera ainsi nommée dans la suite de la description.

Les valeurs préférées pour les différentes propriétés sont: une TBA élevée, un allongement à la rupture en traction ⩾ 1000%, une température de pliabilité à froid la plus basse possible, une résistance au fluage élevée et une bonne stabilité thermique.

Les résultats sont donnés dans le tableau I ci-après.

## Tableau I

| Liants | Bitumes oxidés | Bitumes SBS | Bitumes PPA | B.P.S. |
|---|---|---|---|---|
| Composition / Propriétés | Bitumes «soufflés» | Bitume de distillation directe 80/100 + 10 à 15% SBS (total 100%) | Bitume de distillation directe 80/100 + ~30% PPA (total 100%) | Bitume de distillation directe 80/100 + 25% polyoléfine + 5% élastomère (total 100%) |
| TBA en °C | 90 à125 | 95 à 130 | ~145 | 145 |
| Pénétration 25 °C – 1/10 mm | 40 à 25 | 40 à 60 | ~ 30 | 30–50 |
| Allongement à la rupture en traction – % | estimé entre 50 et 100% | 1500–2000 | 100–400 | 1500 |
| Pliabilité à froid résiste à °C | >0 | −10 à −30 | 0 à −10 | −30, −40 |
| Résistance au fluage liant armé, résiste à °C | >90 | >90 | >110 | >110 |
| Stabilité thermique, ½ h à 300 °C, chute du TBA en °C | <10 | >40 | <10 | <10 |
| Soudabilité | bonne | mauvaise | très bonne | très bonne |

Dans la composition BPS de l'invention, la polyoléfine est un copolymère propylène-éthylène-butylène et l'élastomère est un copolymère triséquencé styrène-butadiène-styrène de poids moléculaire 200 000 environ.

A la lecture des résultats du tableau I, on constate que la composition de l'invention présente une association de propriétés favorables que ne présentent pas les autres compositions antérieures.

La composition bitumineuse de l'invention est utilisable seule avec éventuellement une charge et/ou un pigment et/ou d'autres additifs précités. Elle peut être appliquée à l'état fondu à une température de 250°C environ pour réaliser des bourrages de joints d'étanchéité, comme enduit d'application à chaud, comme liant routier, etc. Elle peut être appliquée à l'état de solution dans des solvants hydrocarbonés aliphatiques ou aromatiques, de type naphta par exemple, sous forme d'un mastic.

Pour ces applications, l'élastomère est avantageusement présent en une proportion se situant dans la zone médiane de la gamme précitée.

La composition de l'invention est également utilisable pour la fabrication d'éléments d'étanchéité qui font également partie de l'invention.

Ces éléments comprennent un support formant armature sur lequel est appliquée la composition précitée.

A titre d'armatures on peut utiliser des supports traditionnels tels que carton feutre, toiles de verre ou de jute, voiles de verre, feuilles métalliques, etc. On peut utiliser également des non-tissés synthétiques (polyester en particulier) qui ont une masse au m² comprise entre 50 et 500 g environ et un allongement à la rupture en traction supérieur à 10%.

On peut aussi utiliser des toiles en fibres synthétiques (polyester, polyamide, etc. ...) qui ont une masse au m² comprise entre 50 et 500 g environ et un fort allongement à la rupture de 10 à 40%.

Pour assurer la meilleure homogénéité entre les propriétés du BPS et de l'armature on préfère utiliser une matière d'armature alliant une résistance mécanique ≥3 da N/cm à un fort allongement à la rupture ≥10%.

L'élément d'étanchéité peut ainsi se présenter sous la forme d'une feuille d'étanchéité utilisable comme joint plat de dilatation. Elle peut être préparée de la façon suivante:

L'armature de la largeur désirée (par exemple 1 m) et de longueur infinie est plongée dans une cuve contenant le BPS fondu vers 180°C environ, de telle sorte que la matière la constituant soit parfaitement imprégnée ou enrobée.

L'armature passe alors entre deux cylindres horizontaux chauffés, afin que le BPS puisse y être déposé sur les faces supérieure et inférieure.

La feuille enrobée de BPS peut recevoir sur les deux faces un sablage superficiel afin d'éviter le collage de la masse bitumineuse sur les installations de fabrication disposées en aval conduisant à la découpe du produit en rouleaux, généralement de 10 ou de 20 m².

A la place du sablage, la feuille peut recevoir sur une face, soit une autoprotection par des granulés minéraux ou des paillettes d'ardoise collés sur le BPS réchauffé, soit une feuille métallique possédant initialement un dessin particulier conférant à la feuille d'étanchéité des propriétés thermostables, soit une feuille de papier kraft, etc.

On peut également enduire de BPS sur une face seulement une feuille (par exemple de papier kraft), cette feuille pouvant éventuellement être enlevée au moment de l'application du produit.

On peut ainsi obtenir des feuilles d'étanchéité:
a) à base de toile de verre, sous la forme d'une feuille sablée sur les deux faces (épaisseur 3 à 6 mm) ou revêtue sur une face par une feuille métallique ou des granulés minéraux. Cette feuille se soude très facilement au chalumeau. Elle peut servir à la réalisation de relevés d'étanchéité ou en tant qu'élément constitutif d'un complexe d'étanchéité.

b) à base de voile de verre, semblables aux précédentes et applicables aux ouvrages d'art et comme élément constitutif d'un complexe d'étanchéité.

c) à base de non-tissés synthétiques, semblables aux précédentes et applicables aux ouvrages d'art, aux terrasses de jardins, aux parkings et aux toitures.

d) à base de toile de fibres synthétiques, semblables aux précédentes et applicables comme joint plat de dilatation et élément constitutif de complexe d'étanchéité.

Pour ces applications, la teneur en élastomère du BPS se situera avantageusement dans la partie supérieure de la gamme.

Il peut s'agir également d'une feuille de BPS protégée comme indiqué précédemment, ayant une épaisseur de 2 à 4 mm environ et utilisable pour le pontage de joints.

L'élément d'étanchéité peut aussi avoir la forme d'un complexe d'étanchéité composé de plusieurs feuilles d'étanchéité assemblées, par exemple une couche formée d'une armature en toile de verre enrobée de BPS et une couche formée d'une armature de polyester enrobée de BPS soudées l'une à l'autre par application de chaleur, par exemple au chalumeau.

Ces complexes sont particulièrement utilisables pour réaliser des revêtements d'étanchéité des terrasses de jardins, des parkings, des toitures, des cuvelages, etc.

Pour ces applications, la teneur en élastomère du BPS se situera avantageusement dans la partie inférieure de la gamme.

Les exemples non limitatifs suivants sont donnés à titre d'illustration de l'invention.

Exemple 1

En vue d'une application comme mastic pour enduit d'application à chaud, on prépare la composition suivante:

| Bitume de distillation directe 80/100 | 70% en poids |
| Copolymère éthylène-propylène | 25% en poids |
| Copolymère séquencé styrène-butadiène-styrène | 5% en poids |

Les propriétés de ce BPS apparaissent dans le tableau II ci-après.

Exemple 2

On fabrique une feuille d'étanchéité utilisable comme joint plat de dilatation sous forme d'un rouleau de 15 m de long et 50 cm de large, d'une épaisseur de 3 à 4 mm et d'une masse de 4 kg/m² environ.

La composition au m² est la suivante:

| Armature (toile de polyamide) | 160 g/m² |
| BPS | 3200 g/m² |
| Silice blanche | 640 g/m² |

La composition du BPS est la suivante:

| Bitume de distillation directe 80/100 | 71% en poids |
| Copolymère propylène-éthylène-butylène | 23% en poids |
| Elastomère butadiène-styrène | 6% en poids |

La feuille présente les propriétés suivantes:

Résistance et allongement à la rupture en traction (mesurés suivant la norme NFG 07 001):

Sens longueur: 40 daN/cm et 20%

Sens largeur: 30 daN/cm et 20%

Pliabilité à froid:

Sur mandrin de diamètre 20 mm, durée d'enroulement 5 secondes.

Pas de fissures jusqu'à −30°C.

Fluage à l'étuve en position verticale:

Sans fluage jusqu'à 110°C.

Poinçonnement statique (selon la norme NFP 84 352):

Supérieur à 22 kg sur le panneau isolant à base de perlite.

Supérieur à 15 kg sur le panneau de polystyrène.

Cette feuille d'étanchéité possède une très grande souplesse à froid et résiste à des forces en traction, compression et cisaillement intenses notamment au niveau des carrefours de joint.

Elle s'adapte aussi parfaitement aux formes irrégulières du support.

Outre ses caractéristiques élevées au niveau de la résistance mécanique, de l'allongement à la rupture en traction, elle possède une excellente réaction vis-à-vis du poinçonnement statique.

Exemple 3

On fabrique un complexe d'étanchéité à deux couches comme suit:

La couche ou feuille inférieure est constituée d'un rouleau de 10 m² (1 m × 10 m) d'une masse de 4 kg/m² et d'une épaisseur minimale de 4 mm.

La composition au m² est la suivante:

| Armature (voile de verre) | 50 g/m² |
| BPS | 3300 g/m² |
| Silice blanche | 650 g/m² |
| | 4000 g/m² |

La composition du BPS est la suivante:

| Bitume 80/100 | 67% en poids |
| Polypropylène | 30% en poids |
| Copolymère séquencé styrène-butadiène-styrène | 3% en poids |

Cette couche présente les propriétés suivantes:

Flexibilité à froid: pas de fissures sur mandrin (⌀20 mm, enroulement 5 secondes) jusqu'à −10°C.

Résistance au fluage: supérieur à 100°C.

Allongement à la rupture du liant: supérieur à 20%.

La couche ou feuille supérieure est composée de la même façon que la couche inférieure sauf que l'armature est constituée d'un non-tissé en polyester de 250 g/m² ayant un allongement à la rupture supérieur à 20% (au lieu du voile de verre).

Le complexe d'étanchéité obtenu par soudage au chalumeau des deux couches présente les propriétés suivantes:

Poinçonnement statique: supérieur à 20 kg.
Résistance à la fissuration à 9°C: par rapport à un complexe traditionnel il résiste au moins cinq fois plus longtemps à un mouvement d'ouverture et de fermeture d'un joint de 2 mm.

On donnera ci-après dans le tableau II les résultats d'essais effectués pour différentes compositions de BPS, les colonnes 1 à 7 donnant des résultats comparatifs pour des compositions suivant la technique antérieure.

Le bitume utilisé est un bitume de distillation directe de pénétration 80/100, la polyoléfine est un copolymère propylène-éthylène-butylène et l'élastomère est un copolymère séquencé styrène-butadiène-styrène.

Tableau II (exemples selon l'invention et exemples comparatifs)

| Composition | (1) | (2) | (3) | (4) | (5) | (6) | (7) | (8) | (9) | (10) | (11) |
|---|---|---|---|---|---|---|---|---|---|---|---|
| (% bitume) | 100 | 90 | 80 | 75 | 70 | 60 | 50 | 72 | 71 | 70 | 67 |
| (% polyoléfine) | 000 | 10 | 20 | 25 | 30 | 40 | 50 | 25 | 25 | 25 | 25 |
| (% élastomère) | 000 | 00 | 00 | 00 | 00 | 00 | 00 | 03 | 04 | 05 | 08 |
| **Propriétés** | | | | | | | | | | | |
| TBA en °C | 42 | 51 | 63 | 142 | 140 | 145 | 150 | 135 | 140 | 143 | 143 |
| Pénétration à 25 °C en 1/10 mm | 100 | 54 | 37 | 35 | 34 | 31 | 27 | 35 | 33 | 33 | 32 |
| Contrainte maximale en traction – da N/cm² | <0,2 | ≃0,2 | 1,3 | 2,5 | 2,7 | 5,2 | 8 | 4 | 3 | 3,6 | 3 |
| Allongement rupture en traction | Non mé-surable | 200 | 300 500 | 500 | 400 | 350 | 300 | 1350 | 1400 | 1500 | 1400 |
| Pliabilité à froid résiste à °C | >0 | >0 | >0 | >0 | −5 | −5 | −10 | −5 | −15 | −30 | −30 |

La pliabilité à froid a été déterminée de la manière suivante:

Sur des éprouvettes conditionnées conformes à la norme NFG 07 001 et de longueur 250 mm on réalise un essai d'enroulement régulier sur un mandrin cylindrique de 20 mm de diamètre. Durée d'enroulement 5 secondes.

Les éprouvettes et le mandrin sont conditionnés pendant au moins 2 heures dans une enceinte climatisée à la température de l'essai.

On détermine la température la plus basse à laquelle peut résister l'échantillon sans présenter de fissures, cette température étant déterminée par approches successives de 5 en 5°C.

La résistance au fluage a été déterminée comme suit:

Des éprouvettes conformes à la norme NFG 07 001 et de 250 mm de longueur, sont suspendues verticalement dans une étuve ventilée.

La température initiale est de 70°C. Après conditionnement de quelques heures, on élève la température de 5 en 5°C par palier de 60 minutes, la température limite étant celle ne donnant lieu ni à un glissement ni à des coulures.

**Revendications**

1. Composition à base de bitume, d'une polyoléfine et d'un élastomère, ladite composition étant pliable à froid sans apparition de fissures pour des températures pouvant atteindre −40°C, ayant un point de ramollissement supérieur ou égal à 140°C (NFT 66 008), possédant un allongement à la rupture de 800 à 2000% (NFG 07 001) et ayant un point de ramollissement et une pliabilité à froid inchangés après un traitement thermique de plusieurs heures à 250°C et de ½ heure à 300°C, caractérisé en ce qu'elle est constituée d'un mélange de (a) 52 à 78% en poids d'un bitume de distillation directe ou oxydé ayant une pénétration comprise entre 40 et 220; (b) 20 à 40% en poids de polyoléfine ayant une viscosité de 10 à 30 Pa.s à 190°C et un point de ramollissement compris entre 100 et 180°C et (c) 2 à 8% en poids d'un élastomère butadiène-styrène.

2. Composition suivant la revendication 1, caractérisée en ce que le mélange contient de 22% à 30% en poids de polyoléfine.

3. Composition suivant la revendication 1 ou 2, caractérisée en ce que le mélange contient de 3% à 6% en poids d'élastomère.

4. Composition suivant l'une quelconque des revendications précédentes, caractérisée en ce que la polyoléfine est un polypropylène, un polybutylène, un copolymère propylène-éthylène ou un copolymère propylène-éthylène-butylène.

5. Composition suivant l'une quelconque des revendications précédentes, caractérisée en ce que l'élastomère est un copolymère styrène-butadiène ayant un poids moléculaire compris entre 100 000 et 300 000 environ.

6. Composition suivant l'une quelconque des revendications précédentes, caractérisé en ce qu'elle contient en outre une charge et/ou un pigment et/ou un ignifugeant.

7. Elément d'étanchéité caractérisé en ce qu'il comprend au moins un support formant armature portant une composition telle que définie à l'une quelconque des revendications 1 à 6.

8. Elément d'étanchéité suivant la revendication 7, caractérisé en ce qu'il est sous la forme d'une feuille constituée d'une armature enrobée de ladite composition.

9. Elément d'étanchéité suivant la revendication 7, caractérisé en ce qu'il est sous la forme d'un complexe constitué d'au moins deux feuilles telles que définies à la revendication 8 fixées l'une sur l'autre.

### Patentansprüche

1. Zusammensetzung auf der Grundlage von Bitumen, einem Polyolefin und einem Elastomer, wobei die Zusammensetzung bei Temperaturen bis zu −40°C kaltverformbar ist, ohne dabei Risse zu bilden, ihr Erweichungspunkt bei 140°C oder darüber (französische Norm NFT 66 008) liegt, ihre Dehnung 800 bis 2000% (französische Norm NFG 07 001) beträgt und ihr Erweichungspunkt sowie ihre Kaltverformbarkeit nach mehrstündiger Wärmebehandlung bei 250°C und einer Wärmebehandlung von ½ Stunde bei 300°C unveränderbar ist, dadurch gekennzeichnet, dass sie aus einem Gemisch von (a) 52 bis 78 Gew.% Bitumen aus direkter oder oxidierender Destillation mit einer Penetration zwischen 40 und 220; (b) 20 bis 40 Gew.% eines Polyolefins mit einer Viskosität von 10 bis 30 Pascal bei 190°C und einem Erweichungspunkt zwischen 100 und 180°C und (c) 2 bis 8 Gew.% eines Butadien-Styrol-Elastomers besteht.

2. Zusammensetzung nach Anspruch 1, dadurch gekennzeichnet, dass das Gemisch 22 bis 30 Gew.% Polyolefin enthält.

3. Zusammensetzung nach Anspruch 1 oder 2, dadurch gekennzeichnet, dass das Gemisch 3 bis 6 Gew.% Elastomer enthält.

4. Zusammensetzung nach einem der vorstehenden Ansprüche, dadurch gekennzeichnet, dass das Polyolefin Polypropylen, Polybutylen, ein Propylen-Äthylen-Copolymer oder ein Propylen-Äthylen-Butylen-Copolymer ist.

5. Zusammensetzung nach einem der vorstehenden Ansprüche, dadurch gekennzeichnet, dass das Elastomer ein Styrol-Butadien-Copolymer mit einem Molekulargewicht zwischen etwa 100 000 und etwa 300 000 ist.

6. Zusammensetzung nach einem der vorstehenden Ansprüche, dadurch gekennzeichnet, dass sie unter anderem eine Charge und/oder ein Pigment und/oder ein Feuerschutzmittel enthält.

7. Dichtelement, dadurch gekennzeichnet, dass es wenigstens eine eine Auflage bildende Armierung aufweist, die eine Zusammmensetzung nach einem der Ansprüche 1 bis 6 trägt.

8. Dichtelement nach Anspruch 7, dadurch gekennzeichnet, dass es blattförmig ausgebildet ist und aus einer Armierung besteht, die von der Zusammensetzung umhüllt ist.

9. Dichtelement nach Anspruch 7, dadurch gekennzeichnet, dass es als Komplex ausgebildet ist, der aus wenigstens zwei Blättern nach Anspruch 8 besteht, die übereinander befestigt sind.

### Claims

1. Bitumen-, polyolefin- and elastomer-based composition, said composition being foldable in the cold without appearance of cracks at temperatures as low as 40°C, having a softening point equal to, or higher than, 140°C (NFT 66 008), having a tensile elongation at break of 800%–2000% (NFG 07 001) and having unmodified softening point and foldability in the cold after a heat treatment of several hours at 250°C and of 0.5 hours at 300°C, characterized in that it comprises a mixture of (a) 52–78 wt% of a straight-run or oxidized bitumen having a penetration of from 40 to 220, (b) 20–40 wt% polyolefin having a viscosity of 10–30 Pa.s at 190°C and a softening point of 100–180°C, and (c) 2–8 wt% of a butadiene-styrene elastomer.

2. Composition according to claim 1, characterized in that said mixture contains 22–30 wt% polyolefin.

3. Composition according to claim 1 or 2, characterized in that said mixture contains 3–6 wt% elastomer.

4. Composition according to any one of the preceding claims, characterized in that said polyolefin is a polypropylene, a polybutylene, a propylene-ethylene copolymer or a propylene-ethylene-butylene copolymer.

5. Composition according to any one of the preceding claims, characterized in that said elastomer is a styrene-butadiene copolymer having a molecular weight of about 100,000 to about 300,000.

6. Composition according to any one of the preceding claims, characterized in that it further contains a filler and/or a pigment, and/or a fireproofing agent.

7. Sealing member, characterized in that it comprises at least a reinforcing support carrying a composition as defined in any one of claims 1 to 6.

8. Sealing member according to claim 7, characterized in that it is in the form of a sheet con-

13 0 009 432 14

sisting of a reinforcing material coated with said composition.

9. Sealing member according to claim 7, characterized in that it is in the form of a complex consisting of at least two sheets as defined in claim 8 fixed together.

8